## Europäisches Patentamt
## European Patent Office
## Office européen des brevets

(11) Publication number: **0 045 824**
**A1**

# (12) EUROPEAN PATENT APPLICATION

(21) Application number: **80302719.2**

(22) Date of filing: **08.08.80**

(51) Int. Ci.³: **B 01 J 39/20**
**B 01 J 41/14, B 01 J 47/00**
**C 08 F 292/00**

(43) Date of publication of application:
**17.02.82 Bulletin 82/7**

(84) Designated Contracting States:
**CH DE FR GB IT LI NL**

(71) Applicant: **TOKYO ORGANIC CHEMICAL INDUSTRIES, LTD.**
**2-1, Toshima 5-chome Kita-ku**
**Tokyo(JP)**

(72) Inventor: **Akiyama, Hiroshi**
**15-4, 1-chome, Higashiowada Ishikawa-shi**
**Chiba(JP)**

(72) Inventor: **Oinuma, Koji**
**1-6, 7-chome, Toshima Kita-ku**
**Tokyo(JP)**

(74) Representative: **Angell, David Whilton et al,**
**Rohm and Haas Company Patent Department**
**Chesterfield House Barter Street**
**London WC1A 2TP(GB)**

(54) Ion exchange material, its preparation and use.

(57) Ion exchange materials having the properties of ion exchange resins and activated carbon and available in uniform large particle size comprise activated carbon granules with ion exchange resin dispersed through the granule matrix. The amount of resin, discounting the ion exchange functional groups, is at most 30% by weight of the activated carbon granules. They are made by dispersing, usually by imbibing, the monomer for the resin, into the granules, polymerizing the monomer and then adding the ion exchange functional groups. The materials may be used to remove or exchange ions in fluid, especially liquid or vapour, media.

EP 0 045 824 A1

## ION EXCHANGE MATERIAL, ITS PREPARATION AND USE

This invention is concerned with ion exchange material, its preparation and use.

Generally, ion exchange resins formed of monovinyl monomers or polyvinyl monomers, particularly those based on styrene, come in particle diameters usually in the range 50 mesh (0.297 mm) to 16 mesh (1.19 mm). They are produced by first preparing granular copolymers through dispersion polymerization and introducing ion exchange groups into the resultant copolymers. According to this method of polymerization, the largest possible particle diameter in which the granular copolymers are obtained is about 14 mesh (1.41 mm). Recently, ion exchange resins referred to as "giant resins" have been prepared and have particle diameters of from 30 mesh (0.59 mm) to 16 mesh (1.19 mm). It is now, however, desirable to provide ion exchange resins having an even greater particle size diameter.

Various ion exchange resins of large particle diameters based on monovinyl monomers and/or polyvinyl monomers are disclosed in Japanese Patent Publication No. 4144/1957. The methods taught therein are however not able to readily produce ion exchange resins of uniform particle size diameter in a commercial quantity.

This invention however enables the production of ion exchange material of a large, uniform particle size in commercially utilizable quantities.

The invention provides an ion exchange material comprising granules of activated carbon having ion exchange resin dispersed through the granule matrix, the amount of resin, excluding the ion exchange functional groups, being at most 30% by weight of the activated carbon granules.

The method for preparing the ion exchange materials of the invention comprises treating a granular activated carbon with monomer comprising monovinyl monomer(s) and/ or polyvinyl monomer(s) in the presence of polymerization initiator, allowing the monomer which is retained in the granular activated carbon matrix to polymerize and thereafter introducing ion exchange functional groups onto the resulting polymer.

Ion exchange material of the present invention may combine the properties of granular activated carbon and those of a synthetic ion exchange resin. Ion exchange material can be prepared according to this invention to have a uniform appearance and exhibit excellent structural stability.

It is important that the amount of monomer(s) to be retained in the granular activated carbon matrix should not exceed 30% by weight of the weight of the granular activated carbon otherwise the resultant polymerization product may suffer from structural collapse when contacted with swelling solvents. Swelling solvents will often be encountered when functionalizing the polymer dispersed through the activated carbon matrix according to known methods.

In other words, the amount of base polymer, to which ion exchange functional groups are added, should not exceed 30% by weight of the activated carbon.

The dispersion of the polymer in the granular activated carbon matrix may be accomplished. by immersing the granular activated carbon in the monomer which is absorbed and retained for polymerization. Alternatively, the granular activated carbon may be dispersed in water or in an aqueous solution of a dispersant and the monomers subsequently added to the resultant dispersion, thereby allowing the carbon granules to absorb the monomer from the dispersion. This method is particularly advantageous when it is desired to add a small quantity of vinyl monomer to be uniformly distributed in granular activated carbon.

Suitable granular activated carbon for use as the matrix in the ion exchange materials of this invention may take a variety of forms including beads, pellets and commercial granules. Selection of the granular activated carbon form and size depends on the purpose for which the ion exchange material finally produced is intended to be used.

The monomer may be dissolved in an organic solvent which can swell the polymer to be formed within the granular activated carbon. Examples of such good swelling solvents are benzene, toluene, xylene, ethylene, dichloride, tricelene and such organic solvents having a linear polymer dissolved in advance therein. Alternatively, there may be used an organic solvent for the monomer which is a poor swelling solvent for the resultant polymer. Examples of such organic solvents include methyl isobutyl carbinol, n-hexane, t-amyl alcohol and butanol.

The polymerization may be performed in an aqueous solution system as the polymerization temperature can then be easily controlled. A dispersant may also be used as part of the aqueous polymerization system. The amount of aqueous polymerization solution used may vary widely although it is preferred that the weight be three to four times the weight of the granular activated carbon.

Examples of monoethylenically unsaturated monomers which may be used in forming the polymer backbones for the ion exchange resins in this invention include aromatic monovinyl monomers such as styrene, methylstyrene, ethylstyrene, and chlorostyrene and aliphatic monovinyl monomers such as methyl acrylate, ethyl acrylate, butyl acrylate, methyl methacrylate, ethyl methacrylate and butyl methacrylate.

Examples of polyethylenically unsaturated monomers which may be used in forming the polymer backbones for the ion exchange resins in this invention include aromatic monomers such as divinyl benzene, divinyl naphthalene and trivinyl benzene and aliphatic monomers such as ethylene glycol diacrylate, ethylene glycol dimethacrylate and divinyl adipate.

Generally in the polymerization, a polymerization initiator is used to encourage the reaction to proceed to completion. This may be any known polymerization initiator, for example benzoyl peroxide, tertiary butyl peroxide, lauryl peroxide, and azoisobutyronitrile.

The polymerization temperature may vary widely as long as it is higher than the decomposition temperature of the polymerization initiator used. Under normal pressure, for example, the polymerization is usually carried out at a temperature of from $50^{\circ}$C. to $90^{\circ}$C.

After polymerization within the activated carbon matrix, a functional ion exchange group may be incorporated onto the polymer in any suitable manner known in the art. One of the conventionally known methods of functionalizing is to use sulfuric acid, chlorosulfonic acid or sulfur trioxide for sulfonating an aromatic resin in the presence of an organic solvent capable of swelling the base polymer to produce a cation exchange resin.

An anion exchange resin may be obtained by halo-methylating the polymer with chloromethyl ether or hydrochloric acid, methanol and formalin and subsequently aminating the halomethylation product with an amine such as trimethyl amine, diethylethanol amine, ethylene diamine or diethylene triamine.

The ion exchange material of this invention may be made of uniform size and in commercial production quantities. These ion exchange materials may be used in a variety of commercial applications in fluid, especially liquid or vapour media, in which their ion exchange properties and the properties of activated carbon are valuable. The following Examples, which are presented for the purposes of illustration only, show some preferred embodiments of the invention and some comparative embodiments.

Example 1.

A 70-g. portion of a commercially available granular activated carbon (6 to 8 mesh in particle diameter, manufactured by Japan Carbon Co., Ltd. and marketed under the trademark "Columbia") is allowed to absorb styrene, divinyl benzene (58% in purity) and azoisobutyronitrile (as a polymerization initiator) in the various amounts indicated in Table 1 below. The imbibed granular activated carbon is stirred in 300 g. of water at 70°C. for four hours and then heated to 75 to 80°C. for one hour.

After completion of the reaction, the impregnated carbon is drained and air-dried at 80°C. for five hours.

Table 1

| Product No. | Styrene (g) | Divinyl Benzene (g) | Azo-iso-butyron-itrile (g) | Yield (g) |
|---|---|---|---|---|
| 1 | 6 | 1 | 0.10 | 75.6 |
| 2 | 12 | 2 | 0.14 | 80.5 |
| 3 | 18 | 3 | 0.21 | 88.9 |
| *4 | 60 | 10 | 0.7 | 108 |

*Product No. 4 is a control wherein the amount of monomers used and retained in the activated carbon matrix exceeds 30% by weight of the activated carbon used.

(A)  Strong Acid Resin

To a 20-g. portion of each product of Table 1 is added, with stirring, 10 g. of ethylene dichloride and 200 g. of 98% concentrated sulfuric acid. The mixture is sulfonated at $120^{\circ}$C. for four hours. Upon completion of the sulfonation, the reaction mixture is thoroughly washed with water and neutralized with 10% caustic soda.

The properties of the resultant cation exchange resins are shown in Table 2.

Table 2

| Product No. | Ion Exch. Capacity (meq/g) | Bead Appearance | % Cracked Beads | Yield (g) |
|---|---|---|---|---|
| 1 | 0.18 | No cracks | 0 | 24.8 |
| 2 | 0.20 | " " | 0 | 24.6 |
| 3 | 0.27 | " " | 0 | 26.3 |
| 4 (control) | 0.45 | Cracks formed | 52 | 25.3 |

(B)  Strong Base Resin

In a flask, a 20-g. portion of each product of Table 1 is thoroughly stirred with 100 g. of ethylene dichloride and 50 g. of chloromethyl ether for 30 minutes. To the resultant mixture is added 10 g. of anhydrous zinc chloride and the mixture is heated at $45^{\circ}$ for seven hours. Upon completion of the chloromethylation, the reaction mixture is treated with water to decompose the excess chloromethyl ether and then washed thoroughly with water. To the washed reaction mixture is added, with stirring, 20 g. of aqueous 30% trimethyl amine. The mixture is held at $50^{\circ}$C. for one hour and then heated to remove the ethylene dichloride (EDC) and excess trimethyl amine. The properties of the resultant resins are shown below.

Table 3

| Product No. | Ion Exch. Capacity (meq/g) | Water Content (%) | Bead Appear- ance | % Cracked Beads | Yield (g) |
|---|---|---|---|---|---|
| 1 | 0.11 | 40.5 | No cracks | 0 | 21.2 |
| 2 | 0.19 | 39.3 | "   ₒ   " | 0 | 23.4 |
| 3 | 0.26 | 43.6 | "      " | 0 | 25.9 |
| 4(control) | 0.35 | 48.7 | Cracks formed | 38 | 28.5 |

Example 2:

A 70-g. portion of granular activated carbon as used in Example 1 is allowed to absorb a solution consisting of 12 g. of styrene, 2 g. of divinyl benzene, 10 g. of methyl isobutyl-carbinol and 0.34 g. of azoisobutyronitrile. The resultant monomer-retaining granular activated carbon is then stirred in 300 g. of an aqueous 2% sodium chloride solution at 80°C. for four hours. It is then heated to remove the methyl isobutyl carbinol from the reaction mixture. Upon removal of the methyl isobutyl carbinol, the reaction mixture is drained and air-dried at 80°C. for five hours to yield 82 g. of a polymer-retaining granular activated carbon.

A 20-g. portion of this product is sulfonated by following the procedure of Example 1(A). There is consequently obtained a cation exchange resin which is found to possess an ion exchange capacity of 0.25 meq/g, contain no cracks and excel in physical properties.

CLAIMS :

1.    An ion exchange material comprising granules of activated carbon having ion exchange resin dispersed through the granule  matrix, the amount of resin,excluding the ion exchange functional groups,, being at most 30% by weight of the activated carbon granules.

2.    A material as claimed in Claim 1 wherein the resin comprises sulfonated cation exchange resin.

3.    A material as claimed in Claim 1 wherein the resin comprises aminated anion exchange resin.

4.    A material as claimed in Claim 1 wherein the resin comprises ion exchange functionalised polymer of one or more monoethylenically unsaturated monomers and one or more polyethylenically unsaturated monomers.

5.    A process for preparing ion exchange material comprising dispersing into the matrix of activated carbon granules polymerization initiator and, in an amount of at most 30% by weight of the activated carbon granules, monoethylenically unsaturated monomer and/or polyethylenically unsaturated monomer, polymerising the monomer(s) within the matrix of the granules and adding ion exchange functional groups to the resulting polymer.

6.    A process as claimed in Claim 5 as applied to the preparation of material as claimed in any of Claims 2 to 4.

7.    A process as claimed in Claim 6 wherein the monomer is dispersed in the granule matrix·(a) by immersing the granules in the monomer or (b) by dispersing the granules in water or an aqueous solution of a dispersant and subsequently adding monomer thereto.

8.  A process as claimed in any one of Claims 5 to 7 wherein the monoethylenically unsaturated monomer comprises styrene, methylstyrene, ethylstyrene, chlorostyrene, methyl acrylate, ethylacrylate, butyl acrylate, methyl methacrylate, ethyl methacrylate and/or butyl methacrylate and the polyethylenically unsaturated monomer comprises divinyl benzene, divinylnaphthalene, trivinyl benzene, ethylene glycol diacrylate, ethylene glycol dimethacrylate and/or divinyl adipate.

9.  The use of ion exchange material as claimed in any of claims 1 to 4 or as produced by a process as claimed in any of claims 5 to 8 to remove or exchange ions in a fluid medium.

10.  The use claimed in Claim 9 wherein the fluid is a liquid or vapour.

0045824

European Patent
Office

EUROPEAN SEARCH REPORT

Application number

EP 80 30 2719

## DOCUMENTS CONSIDERED TO BE RELEVANT

| Category | Citation of document with indication, where appropriate, of relevant passages | Relevant to claim |
|---|---|---|
| | US - A - 2 460 516 (LUACES)<br>* In its entirety *<br>-- | 1,2,3,<br>9,10 |
| | US - A - 4 130 512 (STREAT)<br>* Column 2, lines 14-66;<br>column 4, claims 1,7,8,12,17 *<br>-- | 1-10 |
| A | CHEMICAL ABSTRACTS, vol. 86,<br>no. 4, January 24, 1977,<br>page 29, abstract 17395f<br>Columbus, Ohio, USA<br>R.E. BAREISS et al. "Cation<br>exchange (resins) in porous<br>glass heads"<br>& ANGEW. MAKROMOL.CHEM, 1976,<br>55(1), 129-39.<br>-- | |
| A | US - A - 4 126 073 (GOLDSTEIN)<br>----- | |

### CLASSIFICATION OF THE APPLICATION (Int. Cl.³)

B 01 J 39/20
41/14
47/00.
C 08 F 292/00

### TECHNICAL FIELDS SEARCHED (Int. Cl.³)

B 01 J 47/00
C 08 F 292/00

### CATEGORY OF CITED DOCUMENTS

X: particularly relevant
A: technological background
O: non-written disclosure
P: intermediate document
T: theory or principle underlying
the invention
E: conflicting application
D: document cited in the
application
L: citation for other reasons

&: member of the same patent
family,
corresponding document

The present search report has been drawn up for all claims

| Place of search | Date of completion of the search | Examiner |
|---|---|---|
| The Hague | 20-07-1981 | WENDLING |

EPO Form 1503.1   06.78